# EUROPEAN PATENT APPLICATION

(11) **EP 4 818 249 A1**
(43) Date of publication of application: **07.10.2026**
(21) Application number: 24897061.8
(22) Date of filing: 26.09.2024
(51) Int. Cl.: C08L 23/10, C08F 4/654, C08F 4/658, C08F 297/08

(54) **METHOD FOR PRODUCING PROPYLENE-BASED BLOCK COPOLYMER**

(30) Priority: 30.11.2023 JP 2023202629
(71) Applicant: TOHO TITANIUM CO., LTD., Chigasaki-shi, Kanagawa 253-8510 (JP)
(72) Inventor: GOTO, Keisuke, Chigasaki-shi, Kanagawa 253-8510 (JP)
(74) Representative: Müller-Boré & Partner Patentanwälte PartG mbB
(86) International application number: PCT/JP2024/034470
(87) International publication number: WO 2025/115371

(57) **Abstract**

The present invention provides a method for easily producing a propylene-based block copolymer having a high melt flow rate and a high content of propylene/α-olefin copolymer components, which exhibits excellent polymerization activity in the first polymerization step and the second polymerization step. A method for producing propylene-based block copolymer comprises a first polymerization step of polymerizing olefins containing 95 to 100 mass% of propylene using a catalyst for olefin polymerization comprising (A) a solid catalyst component for olefin polymerization containing titanium, magnesium, a halogen, and a 1,3-diether compound, and (B) an organoaluminum compound to obtain a propylene-based polymer under a temperature condition of 45°C to 65°C, and a subsequent second polymerization step of copolymerizing olefins containing 5 mass% or more and less than 95 mass% of propylene and an α-olefin excluding propylene in the presence of the propylene-based polymer under a temperature condition of 50°C to 90°C to obtain a propylene/α-olefin copolymer.

## Description

### Technical Field

The present invention relates to a method for producing a propylene-based block copolymer.

### Background Art

Conventionally, olefins such as propylene have been polymerized using a catalyst for olefin polymerization, and in particular, propylene-based block copolymers polymerized using a catalyst for olefin polymerization are preferably used due to excellence in balance between rigidity and impact resistance.

Among propylene-based block copolymers, ethylene-propylene block copolymers in particular have good mechanical properties such as rigidity and heat resistance, and can be produced relatively inexpensively, being suitable for a wide range of applications.

The ethylene-propylene block copolymer refers to a blend of a propylene-based polymer mainly composed of propylene, and a random copolymer of propylene and ethylene, and is produced typically by a method including performing polymerizations sequentially under conditions corresponding to desired polymers and then blending the respective polymers in a reaction vessel.

For example, as a polymerization reaction to obtain an ethylene-propylene block copolymer, a homopolymerization reaction of propylene or a random copolymerization reaction of propylene with a small amount of ethylene is performed in a preceding stage, and then a copolymerization reaction of propylene and ethylene in the presence of the resulting propylene-based polymer is performed in a latter stage in a preferred practice. The ethylene-propylene block copolymer obtained by the method is melted and then molded using various molding machines, stretching machines, or the like. The resulting products are used for a variety of applications, including molded products such as automobile parts and home appliance parts, as well as containers and sheets.

As catalysts for olefin polymerization for use in producing the propylene-based block copolymers, many catalysts for olefin polymerization including solid catalyst components containing magnesium atoms, titanium atoms, halogen atoms, and internal electron donor compounds such as phthalic acid esters as essential components, an organoaluminum compound, and an organosilicon compound as external electron donor compound have been proposed (refer to, for example, Patent Literature 1).

### Citation List

### Patent Literature

Patent Literature 1
Japanese Patent Laid-Open No. 2003-268060

### Summary of Invention

### Technical Problem

Since the ethylene-propylene block copolymers are often used in injection molding for automobile bumpers or the like, copolymers having an excellent melt flow rate (hereinafter also referred to as MFR) have been required to improve the productivity in the injection molding process.

Also, in order to increase the impact resistance of an ethylene-propylene block copolymer, the content of the random copolymer component is required to be at a certain level or more. Further, the majority of ethylene that constitutes the ethylene-propylene block copolymer is required to be incorporated into the random copolymer such that the amount of crystalline polyethylene is small. Accordingly, a high polymerization activity during formation of the random copolymer of propylene and ethylene as rubber portion, and an efficient introduction of ethylene into the random copolymer have been required.

As described above, a method for producing an ethylene-propylene block copolymer including producing a propylene-based polymer component mainly composed of propylene in a first polymerization step, and randomly copolymerizing propylene and ethylene in the presence of the propylene-based polymer in a second polymerization step is known.

In the polymerization reaction, generally, in the case where the polymerization activity in the first polymerization step increases excessively, the polymerization activity in the second polymerization step hardly increases, and as a result, the content of the propylene/ethylene random copolymer component in the resulting propylene-based block copolymer tends to decrease.

In order to solve the technical problem, the present inventors have conceived an idea for enhancing the polymerization activity in the second polymerization step by suppressing the polymerization temperature in the first polymerization step to a temperature lower than the normal polymerization temperature to suppress the polymerization activity in the first polymerization step.

However, through the investigation by the present inventors, it has been revealed that in the case where the catalyst for olefin polymerization containing a phthalic acid ester as internal electron donor compound is used as in Patent Literature 1 and the polymerization temperature in the first polymerization step is controlled to a temperature lower than the normal polymerization temperature, the yield of the resulting ethylene-propylene block copolymer also decreases.

Also, in the case of using the catalyst for olefin polymerization containing a phthalic acid ester as internal electron donor compound as described in Patent Literature 1 in the polymerization of olefins, an ethylene-propylene block copolymer excellent in melt flow rate (MFR) is hardly obtained.

Furthermore, in a trial to obtain an ethylene-propylene block copolymer having a high content ratio of propylene/ethylene random copolymer through improvement in the polymerization activity in the second polymerization step, the fluidity of the resulting ethylene-propylene block copolymer usually decreases with an increase in the content ratio of propylene/ethylene random copolymer, so that an ethylene-propylene block copolymer having a sufficient melt flow rate (MFR) has been hardly obtained.

Under these circumstances, the present invention aims to provide a method for easily producing a propylene-based block copolymer having a sufficiently high melt flow rate for practical use and a high content of propylene/α-olefin copolymer, which exhibits excellent polymerization activity in the first polymerization step to perform a homopolymerization reaction of propylene or a copolymerization reaction of propylene with a small amount of an α-olefin (excluding propylene), and also excellent polymerization activity in the second polymerization step to perform a copolymerization reaction of propylene and an α-olefin (excluding propylene) in the presence of the propylene-based polymer obtained in the first polymerization step.

### Solution to Problem

Through extensive research, the present inventors have found that the technical problem can be solved by performing a first polymerization step of polymerizing olefins containing 95 to 100 mass% of propylene using a catalyst for olefin polymerization comprising (A) a solid catalyst component for olefin polymerization containing titanium, magnesium, a halogen, and a 1,3-diether compound as internal electron donor compound, and (B) an organoaluminum compound to obtain a propylene-based polymer under a temperature condition of 45°C to 65°C, and then performing a second polymerization step of copolymerizing olefins containing 5 mass% or more and less than 95 mass% of propylene and an α-olefin excluding propylene in the presence of the propylene-based polymer under a temperature condition of 50°C to 90°C to obtain a propylene/α-olefin copolymer, so that the present invention has been completed.

That is, the present invention provides the followings:
(1) A method for producing propylene-based block copolymer comprising:
   a first polymerization step of polymerizing olefins containing 95 to 100 mass% of propylene using a catalyst for olefin polymerization comprising (A) a solid catalyst component for olefin polymerization containing titanium, magnesium, a halogen, and a 1,3-diether compound as internal electron donor compound, and (B) an organoaluminum compound to obtain a propylene-based polymer under a temperature condition of 45°C to 65°C, and
   a subsequent second polymerization step of copolymerizing olefins containing 5 mass% or more and less than 95 mass% of propylene and an α-olefin excluding propylene in the presence of the propylene-based polymer under a temperature condition of 50°C to 90°C to obtain a propylene/α-olefin copolymer;
(2) The method for producing the propylene-based block copolymer according to the item (1),
   wherein (B) the organoaluminum compound is one or more compounds represented by the following general formula (I):

      R¹ₚAlQ₃₋ₚ (I)
   wherein R¹ is an alkyl group having 1 to 6 carbon atoms, Q is a hydrogen atom or a halogen atom, p satisfies 0<p≤3, in the case where a plurality of R¹ is present, R¹ each may be the same or different from each other, and in the case where a plurality of Q is present, Q each may be the same or different from each other;
(3) The method for producing a propylene-based block copolymer according to the item (1) or (2),
   wherein the catalyst for olefin polymerization further comprises (C) an external electron donor compound;
(4) The method for producing a propylene-based block copolymer according to any one of the items (1) to (3),
   wherein the content of propylene/α-olefin portion in the resulting propylene-based block copolymer is 25.0 to 50.0 mass%.

### Advantageous Effects of Invention

The present invention provides a method for easily producing a propylene-based block copolymer, which exhibits excellent polymerization activity in the first polymerization step to perform a homopolymerization reaction of propylene or a copolymerization reaction of propylene with a small amount of an α-olefin (excluding propylene), and also excellent polymerization activity in the second polymerization step to perform a copolymerization reaction of propylene and an α-olefin (excluding propylene) in the presence of the propylene-based polymer obtained in the first polymerization step, having a sufficiently high melt flow rate for practical use and a high content of propylene/α-olefin copolymer components.

### Description of Embodiments

First, the method for producing the propylene-based block copolymer according to the present invention will be described.

The method for producing propylene-based block copolymer according to the present invention comprises:
a first polymerization step of polymerizing olefins containing 95 to 100 mass% of propylene using a catalyst for olefin polymerization comprising (A) a solid catalyst component for olefin polymerization containing titanium, magnesium, a halogen, and a 1,3-diether compound as internal electron donor compound, and (B) an organoaluminum compound to obtain a propylene-based polymer under a temperature condition of 45°C to 65°C, and
a subsequent second polymerization step of copolymerizing olefins containing 5 mass% or more and less than 95 mass% of propylene and an α-olefin excluding propylene in the presence of the propylene-based polymer under a temperature condition of 50°C to 90°C to obtain a propylene/α-olefin copolymer.

In the method for producing a propylene-based block copolymer according to the present invention, examples of (A) the solid catalyst component for olefin polymerization containing titanium, magnesium, a halogen, and a 1,3-diether compound as internal electron donor compound include a contact reaction product obtained by contacting raw material components serving as supply source of magnesium, titanium, and a halogen with an internal electron donor compound containing a 1,3-diether compound in an organic solvent to cause a reaction.

Specific examples of the solid catalyst component for olefin polymerization include a contact reaction product obtained by using a magnesium compound and a tetravalent-titanium halogen compound as raw material components to serve as supply sources of magnesium, titanium and halogen, and contacting these raw material components with an internal electron donor compound containing a 1,3-diether compound.

Examples of the magnesium compound include one or more selected from dialkoxy magnesium, magnesium dihalide, alkoxy magnesium halide, and the like.

Among the magnesium compounds, dialkoxy magnesium or magnesium dihalide is preferred. Specific examples thereof include dimethoxy magnesium, diethoxy magnesium, dipropoxy magnesium, dibutoxy magnesium, ethoxy methoxy magnesium, ethoxy propoxy magnesium, butoxy ethoxy magnesium, magnesium dichloride, magnesium dibromide and magnesium diiodide, and diethoxy magnesium and magnesium dichloride are particularly preferred.

Among the magnesium compounds, dialkoxy magnesium may be obtained by reacting metallic magnesium with an alcohol in the presence of a halogen, a halogen-containing metal compound, or the like.

The dialkoxy magnesium is preferably in a granular or powder form, and the shape thereof for use may be amorphous or spherical.

With use of spherical dialkoxy magnesium in a spherical shape, a polymer powder having a better particle shape (in a more spherical shape) and a narrower particle size distribution is obtained, so that handling of the polymer powder produced during polymerization operation is improved to prevent occurrence of blockage or the like caused by fine powder contained in the produced polymer powder.

The spherical dialkoxy magnesium is not necessarily required to be perfectly spherical, and ones in an elliptical shape or potato-shape may also be used.

The average particle size (average particle size D50) of the dialkoxy magnesium is preferably 1.0 to 200.0 µm, more preferably 5.0 to 150.0 µm. The average particle size D50 refers to the particle diameter at 50% of the cumulative particle size in the volume cumulative particle size distribution in measurement using a laser light scattering/diffraction particle size analyzer.

In the case where the dialkoxy magnesium is spherical, the average particle size D50 is preferably 1.0 to 100.0 µm, more preferably 5.0 to 80.0 µm, and still more preferably 10.0 to 70.0 µm.

Also, it is preferable that the dialkoxy magnesium have a narrow particle size distribution with few fine particles and few coarse particles.

Specifically, in measurement using a laser light scattering/diffraction particle size analyzer, the dialkoxy magnesium preferably contains 20% or less, more preferably 10% or less, of particles with a particle size of 5.0 µm or less. On the other hand, in measurement using a laser light scattering/diffraction particle size analyzer, the dialkoxy magnesium preferably contains 20% or less, more preferably 10% or less, of particles with a particle size of 100.0 µm or more.

Furthermore, the particle size distribution expressed as ln(D90/D10) is preferably 3 or less, and more preferably 2 or less. Here, D90 means the particle diameter at 90% of the cumulative particle size in the volume cumulative particle size distribution in measurement using a laser light scattering/diffraction particle size analyzer. Also, D10 means the particle diameter at 10% of the cumulative particle size in the volume cumulative particle size distribution in measurement using a laser light scattering/diffraction particle size analyzer.

The method for producing the spherical dialkoxy magnesium is exemplified in, for example, Japanese Patent Laid-Open No. 62-51633, Japanese Patent Laid-Open No. 3-74341, Japanese Patent Laid-Open No. 4-368391, and Japanese Patent Laid-Open No. 8-73388.

The magnesium compound is preferably in the form of a solution or suspension during reaction. Being in the form of a solution or suspension allows the reaction to proceed suitably.

In the case where the magnesium compound is a solid, the solid may be dissolved in a solvent capable of solubilizing magnesium compounds to make a magnesium compound in a solution state, or may be suspended in a solvent incapable of solubilizing magnesium compounds to make a magnesium compound suspension.

In the case where the magnesium compound is a liquid, the liquid may be used directly as a magnesium compound in a solution state, or may be further dissolved in a solvent capable of solubilizing magnesium compounds for use as a magnesium compound in a solution state.

Examples of the compound capable of solubilizing a solid magnesium compound include at least one compound selected from alcohols, ethers, and esters. Alcohols such as ethanol, propanol, butanol, and 2-ethylhexanol are preferred, and 2-ethylhexanol is particularly preferred.

On the other hand, examples of the medium incapable of solubilizing a solid magnesium compounds include one or more selected from saturated hydrocarbon solvents and unsaturated hydrocarbon solvents that do not dissolve magnesium compounds.

In the method for producing a propylene-based block copolymer according to the present invention, the tetravalent-titanium halogen compound, which is a raw material component as source of titanium and a halogen constituting (A) the solid catalyst component for olefin polymerization, is not particularly limited, and may preferably be one or more compounds selected from the group of titanium halides and alkoxy titanium halides represented by the following general formula (II):

Ti(OR²)ₜX₄₋ₜ (II)

wherein R² represents an alkyl group having 1 to 4 carbon atoms, X represents a halogen atom such as a chlorine atom, a bromine atom, and an iodine atom, and t satisfies: 0≤s≤3.

In the general formula (II), t satisfies: 0≤t≤3, and specific examples of t include 0, 1, 2, and 3.

Examples of the titanium halide represented by the general formula (II) include one or more titanium tetrahalides selected from titanium tetrachloride, titanium tetrabromide, titanium tetraiodide, and the like.

Examples of the alkoxy titanium halide represented by the general formula (II) include one or more selected from methoxy titanium trichloride, ethoxy titanium trichloride, propoxy titanium trichloride, n-butoxy titanium trichloride, dimethoxy titanium dichloride, diethoxy titanium dichloride, dipropoxy titanium dichloride, di-n-butoxy titanium dichloride, trimethoxy titanium chloride, triethoxy titanium chloride, tripropoxy titanium chloride, tri-n-butoxy titanium chloride, and the like.

As the tetravalent titanium halogen compound, a titanium tetrahalide is preferred, and titanium tetrachloride is more preferred.

These titanium compounds may be used alone or in combination of two or more.

In the method for producing a propylene-based block copolymer according to the present invention, the solid catalyst component for olefin polymerization contains a 1,3-diether compound as internal electron donor compound.

In the present application, 1,3-diether compounds refer to a group of compounds that have a propane skeleton with ether groups bonded to the 1,3 positions (1,3-dialkoxypropane structure) and may further contain desired substituents.

Examples of the 1,3-diether compound include one or more selected from the compounds represented by the following general formula (III):

R³OCH₂CR⁴R⁵CH₂OR⁶ (III)

wherein R⁴ and R⁵ represent a hydrogen atom, a halogen atom, an alkyl group having 1 to 12 carbon atoms, a vinyl group, an alkenyl group having 3 to 12 carbon atoms, a cycloalkyl group or a cycloalkenyl group having 3 to 12 carbon atoms, an aromatic hydrocarbon group or a halogen-substituted aromatic hydrocarbon group having 6 to 12 carbon atoms, an aromatic hydrocarbon group having 7 to 12 carbon atoms with a substituent, an alkylamino group having 1 to 12 carbon atoms, or a dialkylamino group having 2 to 12 carbon atoms; R⁴ and R⁵ may be the same or different from each other; R⁴ and R⁵ may be bonded to each other to form a ring; R³ and R⁶ represent an alkyl group having 1 to 12 carbon atoms, a vinyl group, an alkenyl group having 3 to 12 carbon atoms, a cycloalkyl group having 3 to 6 carbon atoms, an aromatic hydrocarbon group or a halogen-substituted aromatic hydrocarbon group having 6 to 12 carbon atoms, or an aromatic hydrocarbon group having 7 to 12 carbon atoms with a substituent; and R³ and R⁶ may be the same or different from each other.

Specific examples of the 1,3-diether compound include one or more selected from 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, 2,2-bis(cyclohexyl methyl)1,3-dimethoxypropane, 9,9-bis(methoxymethyl)fluorene, and the like, and in particular, one or more selected from 2-isopropyl-2-isobutyl-1,3-dimethoxypropane, 2-isopropyl-2-isopentyl-1,3-dimethoxypropane, and 9,9-bis(methoxymethyl)fluorene are preferred.

In the method for producing a propylene-based block copolymer according to the present invention, (A) the solid catalyst component for olefin polymerization contains a 1,3-diether compound as internal electron donor compound, so that even in the case where a polymerization reaction is performed at a temperature of about 45°C to 65°C, which is lower than usual, in the first polymerization step described below, the polymerization activity is easily maintained and high polymerization activity is easily exhibited also in the second polymerization step.

Further, in the method for producing a propylene-based block copolymer according to the present invention, (A) the solid catalyst component for olefin polymerization contains a 1,3-diether compound as internal electron donor compound, so that the resulting propylene-based block copolymer can maintain a high melt flow rate (MFR) even with a high propylene/α-olefin random copolymer content ratio of about 25.0 to 50.0 mass%.

In the method for producing a propylene-based block copolymer according to the present invention, (A) the solid catalyst component for olefin polymerization may contain one or more compounds selected from benzoic acid esters, diesters (malonic acid diesters, maleic acid diesters, succinic acid diesters and glutaric acid esters), diol diesters, carbonic acid ethers, carbonic acid diesters, diester ethers, heteroatom-containing compounds, and the like in addition to 1,3-diether compounds as internal electron donor compound.

In the method for producing a propylene-based block copolymer according to the present invention, (A) the solid catalyst component for olefin polymerization may or may not contain a phthalic acid ester as internal electron donor compound, though containing no phthalic acid ester is preferred.

In the method for producing a propylene-based block copolymer according to the present invention, (A) the solid catalyst component for olefin polymerization contains preferably 60 to 100 wt%, more preferably 70 to 100 wt%, and still more preferably 80 to 100 wt% of the 1,3-diether compound, relative to the total content of the internal electron donor compound.

In the method for producing a propylene-based block copolymer according to the present invention, (A) the solid catalyst component for olefin polymerization contain a 1,3-diether compound at the ratio relative to the total content of the internal electron donor compound, so that even in the case where the catalyst for olefin polymerization including (A) the solid catalyst component for olefin polymerization is used at a temperature of about 45°C to 65°C, which is lower than usual, in the first polymerization step described below to perform a polymerization reaction, the catalyst can easily maintain polymerization activity and can easily exhibit high polymerization activity also in a second polymerization step.

Further, in the method for producing a propylene-based block copolymer according to the present invention, since the solid catalyst component for olefin polymerization includes a 1,3-diether compound as internal electron donor compound at the ratio, a product having a sufficiently high melt flow rate (MFR) is easily obtained even with a content ratio of propylene/α-olefin random copolymer in the resulting propylene-based block copolymer increased to about 25.0 to 50.0 mass%,.

In the method for producing a propylene-based block copolymer according to the present invention, (A) the solid catalyst component for olefin polymerization may further contain a polysiloxane.

The polysiloxane is a polymer having a siloxane bond (-Si-O- bond) in the main chain, and is also collectively referred to as silicone oil. It is a linear, partially hydrogenated, cyclic or modified polysiloxane that is liquid or viscous at room temperature and has a viscosity at 25°C of 0.02 to 100 cm²/s (2 to 10000 centistokes), more preferably 0.03 to 5 cm²/s (3 to 500 centistokes).

In the method for producing a propylene-based block copolymer according to the present invention, (A) the solid catalyst component for olefin polymerization further contains polysiloxane, so that in the case where the solid catalyst component is supplied for polymerization of olefins, an olefin polymer excellent in stereoregularity or crystallinity is easily produced, and further, the amount of fine powder in the resulting olefin polymer can be reduced.

In the method for producing a propylene-based block copolymer according to the present invention, (A) the solid catalyst component for olefin polymerization may be prepared, for example, by contacting a dialkoxy magnesium, a tetravalent-titanium halogen compound, an internal electron donor compound, and a polysiloxane on an as needed basis, with each other in an inert organic solvent.

The inert organic solvent is preferably a liquid at room temperature (20°C) and has a boiling point of 50 to 150°C, and more preferably a saturated hydrocarbon compound or aromatic hydrocarbon compound that is liquid at room temperature and has a boiling point of 50 to 150°C.

Specific examples of the inert organic solvent include one or more selected from linear aliphatic hydrocarbon compounds such as hexane, heptane and decane; branched aliphatic hydrocarbon compounds such as methylheptane; alicyclic hydrocarbon compounds such as cyclohexane, methylcyclohexane and ethylcyclohexane; aromatic hydrocarbon compounds such as toluene, xylene and ethylbenzene, and the like.

Among the inert organic solvents, aromatic hydrocarbon compounds which are liquid at room temperature and have a boiling point of 50 to 150°C are preferred, allowing the activity of the resulting solid catalyst component to be easily improved and the stereoregularity of the resulting polymer to be easily improved.

In the method for producing a propylene-based block copolymer according to the present invention, in the case where the components each are brought into contact with each other to prepare (A) the solid catalyst component for olefin polymerization, the preparation may be done under an inert gas atmosphere.

Specifically, in an inert gas atmosphere and under conditions having moisture and the like removed, the components are contacted with each other while being stirred in a vessel equipped with a stirrer, and then reacted at a predetermined temperature to obtain (A) the solid catalyst component for olefin polymerization.

The temperature at which the components are brought into contact with each other may be in a relatively low temperature range around room temperature, in the case where the components are simply brought into contact with each other for stirring and mixing, or in the case where the components are dispersed or suspended for modification.

In the case where the components each are contacted to obtain a product through a reaction, a temperature range of 40 to 130°C is preferred, and in this case, the reaction is preferably caused at the same temperature kept after contacting of the components each.

In the case where the temperature at which the product is obtained is less than 40°C, the reaction proceeds insufficiently, and the resulting solid catalyst component hardly exhibits sufficient performance. Also, in the case where the temperature exceeds 130°C, the solvent used evaporates significantly and so on, which results in difficulty in control of the reaction.

The reaction time for obtaining the product is preferably 1 minute or more, more preferably 10 minutes or more, and still more preferably 30 minutes or more.

Since the ratio of the amounts of the components each used in preparation of (A) the solid catalyst component for olefin polymerization varies depending on the preparation method, it may be determined appropriately.

In preparation of (A) the solid catalyst component for olefin polymerization, the amount of a tetravalent titanium halogen compound to be contacted with 1.00 mole of a dialkoxy magnesium compound is preferably 0.50 to 100.00 moles, more preferably 0.50 to 10.00 moles, and still more preferably 1.00 to 5.00 moles.

In preparation of (A) the solid catalyst component for olefin polymerization, the amount of the internal electron donor compound to be contacted with 1.00 mole of dialkoxy magnesium is preferably 0.01 to 10.00 moles, more preferably 0.01 to 1.00 moles, and still more preferably 0.02 to 0.6 moles.

Further, in the case of using polysiloxane in preparation of (A) the solid catalyst component for olefin polymerization, the amount of polysiloxane to be contacted with 1.00 mole of dialkoxy magnesium is preferably 0.01 to 100.00 g, more preferably 0.05 to 80.00 g, and still more preferably 1.00 to 50.00 g.

Also, in preparation of (A) the solid catalyst component for olefin polymerization, the amount of the inert organic solvent used per 1.000 mol of dialkoxy magnesium is preferably 0.001 to 500.000 mol, more preferably 0.001 to 70.000 mol, and even more preferably 0.005 to 50.000 mol.

Examples of the particularly preferred preparation method for the solid catalyst component for olefin polymerization include the following preparation method.

First, dialkoxy magnesium is suspended in an inert organic solvent containing an alicyclic hydrocarbon compound having a boiling point of 50 to 150°C to obtain a suspension. Next, the resulting suspension is contacted with a tetravalent-titanium halogen compound to be subjected to a reaction treatment.

Before or after contacting the suspension with a tetravalent-titanium halogen compound, the suspension is contacted with an internal electron donor compound at -20 to 130°C. The suspension is further contacted with a polysiloxane to be subjected to a reaction treatment on an as needed basis.

In the preparation method, it is desirable to perform a maturation reaction at a low temperature before or after contacting with the internal electron donor compound.

(A) The solid catalyst component for olefin polymerization contains titanium atoms in an amount of preferably 1.0 mass% to 10.0 mass%, more preferably 1.5 mass% to 8.0 mass%, and still more preferably 1.5 mass% to 5.0 mass%.

(A) The solid catalyst component for olefin polymerization contains magnesium atoms in an amount of preferably 10.0 mass% to 70.0 mass%, more preferably 10.0 mass% to 50.0 mass%, still more preferably 15.0 mass% to 40.0 mass%, and furthermore preferably 15.0 mass% to 25.0 mass%.

(A) The solid catalyst component for olefin polymerization contains halogen atoms in an amount of preferably 20.0 mass% to 90.0 mass%, more preferably 30.0 mass% to 85.0 mass%, still more preferably 40.0 mass% to 80.0 mass%, and furthermore preferably 45.0 mass% to 80.0 mass%.

(A) The solid catalyst component for olefin polymerization contains internal electron donor compounds in a total amount of preferably 0.5 mass% to 30.0 mass%, more preferably 1.0 mass% to 25.0 mass%, and still more preferably 2.0 mass% to 20.0 mass%.

In the present application, the titanium atom content in the solid catalyst component for olefin polymerization refers to the value measured in accordance with the method (oxidation-reduction titration) described in JIS 8311-1997 "Method for determination of titanium in titanium ores".

Also, in the present application, the magnesium content in the solid catalyst component for olefin polymerization means a value measured by the EDTA titration method including dissolving the solid catalyst component for olefin polymerization in a hydrochloric acid solution to be titrated with an EDTA solution.

In the present application, the content of halogen atoms in a solid catalyst component for olefin polymerization refers to a value measured by silver nitrate titration method including treating the solid catalyst component with a mixed solution of sulfuric acid and pure water to prepare an aqueous solution, fractionating a predetermined amount of the aqueous solution, and titrating the halogen atoms with a standard silver nitrate solution.

Also, in the present application, the content of the internal electron donor compound means the value obtained by hydrolyzing the solid catalyst, then extracting the internal electron donor with an aromatic solvent, and measuring the solution by a gas chromatography FID (Flame Ionization Detector) method.

In the method for producing a propylene-based block copolymer according to the present invention, the catalyst for olefin polymerization comprises (B) an organoaluminum compound.

In the method for producing a propylene-based block copolymer according to the present invention, it is preferable that (B) the organoaluminum compound constituting the catalyst for olefin polymerization be one or more compounds represented by the following general formula (I):

R¹ₚAlQ₃₋ₚ (I)

wherein R¹ is an alkyl group having 1 to 6 carbon atoms, Q is a hydrogen atom or a halogen atom; p satisfies 0<p≤3; in the case where a plurality of R¹ is present, R¹ each may be the same or different from each other; and in the case where a plurality of Q is present, Q each may be the same or different from each other.

In the organoaluminum compound represented by the general formula (I), R¹ is an alkyl group having 1 to 6 carbon atoms, and specific examples thereof include a methyl group, an ethyl group, an n-propyl group, an isopropyl group, an n-butyl group, and an isobutyl group.

In the organoaluminum compound represented by the general formula (I), Q represents a hydrogen atom or a halogen atom, and in the case where Q is a halogen atom, examples thereof include a fluorine atom, a chlorine atom, a bromine atom, and an iodine atom.

Also, in the organoaluminum compound represented by the general formula (I), p satisfies 0<p≤3, being preferably 2 to 3, and more preferably 2, 2.5 or 3.

Specific examples of the organoaluminum compound represented by the general formula (I) include one or more selected from triethyl aluminum, diethyl aluminum chloride, triisobutyl aluminum, diethyl aluminum bromide, and diethyl aluminum hydride, and triethyl aluminum and triisobutyl aluminum are preferred.

In the method for producing a propylene-based block copolymer according to the present invention, it is believed that since the catalyst for olefin polymerization contains the specific organoaluminum compound represented by the general formula (I), the action of the organoaluminum compound on the internal electron donor compound constituting the solid catalyst component for olefin polymerization is improved to optimally activate the solid catalyst component for olefin polymerization. Thus, it is believed that excellent catalytic activity is exhibited during polymerization processing to enable the production of olefin polymers excellent in stereoregularity.

In the method for producing a propylene-based block copolymer according to the present invention, it is preferable that the catalyst for olefin polymerization further comprises (C) an external electron donor compound, together with (A) the solid catalyst component for olefin polymerization and (B) the organoaluminum compound.

In the method for producing a propylene-based block copolymer according to the present invention, examples of (C) the external electron donor compound include a silicon compound represented by the following general formula (IV):

R⁷ᵣSi(NR⁸R⁹)ₛ(OR¹⁰)₄₋₍ᵣ₊ₛ₎ (IV)

wherein r is 0 or 1 to 2, s is 0 or 1 to 2, r+s is 0 or 1 to 4; R⁷, R⁸ and R⁹ are any group selected from a hydrogen atom or a linear or branched alkyl group having 1 to 12 carbon atoms, a substituted or unsubstituted cycloalkyl group, a phenyl group, an allyl group and an aralkyl group, which may contain a heteroatom and may be the same or different from each other; R ⁸ and R⁹ may be bonded to form a ring, and R⁷, R⁸ and R⁹ may be the same or different; and R¹⁰ is any group selected from an alkyl group having 1 to 4 carbon atoms, a cycloalkyl group, a phenyl group, a vinyl group, an allyl group and an aralkyl group, which may contain a heteroatom.

In the silicon compound represented by the general formula (IV), R⁷ is any group selected from a hydrogen atom or a linear or branched alkyl group having 1 to 12 carbon atoms, a substituted or unsubstituted cycloalkyl group, a phenyl group, an allyl group, and an aralkyl group, which may contain a heteroatom.

R⁷ is preferably a linear or branched alkyl group having 1 to 10 carbon atoms or a cycloalkyl group having 5 to 8 carbon atoms, and particularly preferably a linear or branched alkyl group having 1 to 8 carbon atoms or a cycloalkyl group having 5 to 8 carbon atoms.

In the silicon compound represented by the general formula (IV), R⁸ or R⁹ is any group selected from a hydrogen atom or a linear or branched alkyl group having 1 to 12 carbon atoms, a substituted or unsubstituted cycloalkyl group, a phenyl group, an allyl group, and an aralkyl group, which may contain a heteroatom.

R⁸ or R⁹ is preferably a linear or branched alkyl group having 1 to 10 carbon atoms or a cycloalkyl group having 5 to 8 carbon atoms, and particularly preferably a linear or branched alkyl group having 1 to 8 carbon atoms or a cycloalkyl group having 5 to 8 carbon atoms.

Furthermore, R⁸ and R⁹ may be bonded to form a ring, and in this case, (NR⁸R⁹) that forms a ring is preferably a perhydro quinolino group or a perhydro isoquinolino group.

In the silicon compound represented by the general formula (IV), R⁷, R⁸ and R⁹ may be the same or different from each other.

In the silicon compound represented by the general formula (IV), R¹⁰ is any group selected from an alkyl group having 1 to 4 carbon atoms, a cycloalkyl group, a phenyl group, an allyl group and an aralkyl group, and may contain a heteroatom.

R¹⁰ is preferably a linear or branched alkyl group having 1 to 4 carbon atoms.

In the silicon compound represented by the general formula (IV), r is 0 or 1 to 2, and specifically, 0, 1 or 2.

In the silicon compound represented by the general formula (IV), s is 0 or 1 to 2, and specifically, 0, 1 or 2.

In the silicon compound represented by the general formula (IV), r+s is 0 or 1 to 4, and specifically, may be 0, 1, 2, 3 or 4.

Specific examples of the silicon compounds represented by the general formula (IV) include one or more organic silicon compounds selected from phenyl alkoxysilanes, alkyl alkoxysilanes, phenyl alkyl alkoxysilanes, cycloalkyl alkoxysilanes, cycloalkyl alkyl alkoxysilanes, (alkylamino)alkoxysilanes, alkyl(alkylamino)alkoxysilanes, alkyl(alkylamino)silanes, and alkylamino silanes, and the like.

Examples of the particularly preferred silicon compounds having s of 0 in the general formula (IV) include one or more organic silicon compounds selected from di-n-propyl dimethoxy silane, diisopropyl dimethoxy silane, di-n-butyl dimethoxy silane, diisobutyl dimethoxy silane, di-t-butyl dimethoxy silane, t-butyl methyl dimethoxy silane, t-butyl ethyl dimethoxy silane, di-n-butyl diethoxy silane, t-butyl trimethoxy silane, t-butyl triethoxy silane, dicyclohexyl dimethoxy silane, dicyclohexyl diethoxy silane, cyclohexyl methyl dimethoxy silane, cyclohexyl methyl diethoxy silane, cyclohexyl ethyl dimethoxy silane, cyclohexyl ethyl diethoxy silane, dicyclopentyl dimethoxy silane, dicyclopentyl diethoxy silane, cyclopentyl methyl dimethoxy silane, cyclopentyl methyl diethoxy silane, cyclopentyl ethyl diethoxy silane, cyclohexyl cyclopentyl dimethoxy silane, cyclohexyl cyclopentyl diethoxy silane, 3-methylcyclohexyl cyclopentyl dimethoxy silane, 4-methylcyclohexyl cyclopentyl dimethoxy silane, and 3,5-dimethyl cyclohexyl cyclopentyl dimethoxy silane.

Examples of the silicon compound having s of 1 or 2 in the general formula (IV) include one or more organic silicon compounds selected from di(alkyl amino)dialkoxy silane, (alkylamino)(cycloalkyl amino)dialkoxy silane, (alkyl amino)(alkyl)dialkoxy silane, di(cycloalkyl amino)dialkoxy silane, vinyl(alkyl amino)dialkoxy silane, allyl(alkyl amino)dialkoxy silane, (alkoxy amino)trialkoxy silane, (alkyl amino)trialkoxy silane, and (cycloalkyl amino)trialkoxy silane, and the like, and particularly preferred examples include ethyl(t-butyl amino)dimethoxy silane, cyclohexyl(cyclohexyl amino)dimethoxy silane, ethyl(t-butyl amino)dimethoxy silane, bis(cyclohexyl amino)dimethoxy silane, bis(perhydro isoquinolino)dimethoxy silane, bis(perhydro quinolino)dimethoxy silane, ethyl(isoquinolino)dimethoxy silane, diethylamino trimethoxy silane, and diethyl amino triethoxy silane. In particular, one or more organosilicon compounds selected from bis(perhydro isoquinolino)dimethoxy silane, diethyl amino trimethoxy silane, and diethyl amino triethoxy silane are preferred.

The silicon compounds represented by the general formula (IV) may be used in combination of two or more types.

In the method for producing a propylene-based block copolymer according to the present invention, the catalyst for olefin polymerization comprises (A) a solid catalyst component for olefin polymerization, (B) an organoaluminum compound, and (C) an external electron donor compound on an as needed basis, i.e., a contact product thereof.

The catalyst for olefin polymerization may be prepared by contacting (A) the solid catalyst component for olefin polymerization, (B) the organoaluminum compound and (C) the external electron donor compound on an as needed basis, in the absence of olefins, or may be prepared by contacting them in the presence of olefins (in a polymerization system) as described below.

In the method for producing a propylene-based block copolymer according to the present invention, the content ratio of the components each constituting the catalyst for olefin polymerization is optional and not particularly limited as long as it has no negative impact on the present invention. Typically, the catalyst for olefin polymerization contains preferably 1 to 2000 moles, more preferably 50 to 1000 moles, of (B) the organoaluminum compound per mole of titanium atom in (A) the solid catalyst component for olefin polymerization. Further, the catalyst for olefin polymerization contains preferably 0.002 to 10.000 moles, more preferably 0.010 to 2.000 moles, and still more preferably contains 0.010 to 0.500 moles, of (C) the external electron donor compound per mole of (B) the organoaluminum compound.

The catalyst for olefin polymerization may be produced by mutually contacting (A) the solid catalyst component for olefin polymerization, (B) the organoaluminum compound, and (C) the external electron donor compound on an as needed basis.

In other words, (A) the solid catalyst component for olefin polymerization and (B) the organoaluminum compound are contacted with each other in the presence of (C) the external electron donor compound, or in the absence of the external electron donor compound, to produce the catalyst.

In production of the catalyst for olefin polymerization, in the case where (A) the solid catalyst component for olefin polymerization is contacted with (B) the organoaluminum compound in the absence of (C) the external electron donor compound, it is preferable that (A) the solid catalyst component for olefin polymerization and (B) the organoaluminum compound be contacted with each other, and then the resulting contact product and (C) the external electron donor compound be contacted with each other.

In production of the catalyst for olefin polymerization, the contact amounts of (A) the solid catalyst component for olefin polymerization and (B) the organoaluminum compound, and the contact amount of (C) the external electron donor compound used on an as needed basis, may be appropriately determined according to the composition of the catalyst for olefin polymerization to be obtained.

The inert gas concentration in the atmosphere during preparation of the catalyst for olefin polymerization is preferably 0.0 to 1.0 mol/L, more preferably 0.0 to 0.5 mol/L, and still more preferably 0.0 to 0.1 mol/L.

Examples of the inert gas include one or more selected from nitrogen gas, helium gas, neon gas, argon gas, and the like.

The catalyst for olefin polymerization may be produced in the presence of the olefins to be polymerized, or in the absence of the olefins to be polymerized.

In production of the catalyst for olefin polymerization, the temperature at which the components are brought into contact is preferably 40°C or less, more preferably 0°C to 40°C, still more preferably 10°C to 40°C, and particularly preferably 10°C to 20°C.

In production of the catalyst for olefin polymerization, the treatment time for contacting components each is preferably 10 seconds to 60 minutes, more preferably 30 seconds to 30 minutes, still more preferably 1 minute to 30 minutes, and particularly preferably 1 minute to 10 minutes.

In production of the catalyst for olefin polymerization, (A) the solid catalyst component for olefin polymerization, (B) the organoaluminum compound, and (C) the external electron donor compound on an as needed basis are contacted with each other to instantly start a reaction, so that the desired catalyst for olefin polymerization can be formed.

In the method for producing a propylene-based block copolymer according to the present invention, by supplying a catalyst for olefin polymerization having a specific (A) solid catalyst component for olefin polymerization and (B) an organoaluminum compound to a polymerization reaction even at a relatively low temperature in the first polymerization step described below, a sufficiently high polymerization activity is easily exhibited, and a high polymerization activity is easily exhibited also in the second polymerization step. Thereby, a propylene-based block copolymer having a sufficiently high melt flow rate for practical use, having a high content of the propylene/α-olefin copolymer component, is easily produced.

The method for producing a propylene-based block copolymer according to the present invention comprises:
a first polymerization step of polymerizing olefins containing 95 to 100 mass% of propylene using the catalyst for olefin polymerization under a temperature condition of 45°C to 65°C, and
a subsequent second polymerization step of copolymerizing olefins containing 5 mass% or more and less than 95 mass% of propylene and an α-olefin excluding propylene in the presence of the propylene-based polymer under a temperature condition of 50°C to 90°C to obtain a propylene/α-olefin copolymer.

In the method for producing a propylene-based block copolymer according to the present invention, in the first polymerization step, olefins containing 95 to 100 mass% of propylene are used, preferably olefins containing 97 to 100 mass% of propylene are used, and more preferably olefins containing 99 to 100 mass% of propylene are used.

In the method for producing a propylene-based block copolymer according to the present invention, the first polymerization step is performed under a temperature condition of 45°C to 65°C, preferably at 50°C to 65°C, and more preferably at 55°C to 60°C.

In the method for producing a propylene-based block copolymer according to the present invention, the first polymerization step is performed under the temperature conditions, so that excessive polymerization reactions in the first polymerization step can be suppressed, and due to use of the specific catalyst for olefin polymerization, a propylene-based polymer as intermediate product can be obtained with a high polymerization activity being easily exhibited.

In the method for producing a propylene-based block copolymer according to the present invention, as the second polymerization step, olefins containing 5 mass% or more and less than 95 mass% of propylene and an α-olefin excluding propylene are copolymerized in the presence of the propylene-based polymer as resulting intermediate product to obtain a propylene/α-olefin copolymer.

In the method for producing a propylene-based block copolymer according to the present invention, examples of the α-olefin other than propylene used in the second polymerization step are not particularly limited as long as one or more are selected from α-olefins other than propylene, including one or more selected from ethylene, 1-butene, 1-pentene, 4-methyl-1-pentene, vinyl cyclohexane, and the like, and ethylene or 1-butene is preferred.

In the method for producing a propylene-based block copolymer according to the present invention, in the second polymerization step, olefins containing 5 mass% or more and less than 95 mass% of propylene and α-olefins excluding propylene are used, preferably olefins containing 10 mass% to 90 mass% of propylene and 10 mass% to 90 mass% of α-olefins other than propylene are used, and more preferably olefins containing 20 mass% to 80 mass% of propylene and 20 mass% to 80 mass% of α-olefins other than propylene are used.

In the method for producing a propylene-based block copolymer according to the present invention, the second polymerization step is performed under a temperature condition of 50°C to 90°C, preferably at a temperature of 55°C to 90°C, more preferably at a temperature of 65°C to 90°C, still more preferably at a temperature of 70°C to 85°C, and particularly preferably at a temperature of 70°C to 80°C.

In the method for producing a propylene-based block copolymer according to the present invention, a polymerization reaction is performed in the second polymerization step under the temperature conditions described above using the specific catalyst for olefin polymerization, and thereby, excellent polymerization activity is easily exhibited in the second polymerization step to easily produce a propylene-based block copolymer having a high content of propylene/α-olefin copolymer.

In the method for producing a propylene-based block copolymer according to the present invention, the olefin monomer such as propylene may be used in any of a gas state and a liquid state, and the treatments in the first and second polymerization steps may be performed in the presence or absence of an organic solvent.

Specifically, in the first polymerization step, the polymerization temperature and polymerization time are adjusted to polymerize monomers in an amount equivalent to 50 to 70 mass% of the entire propylene-based block copolymer to be obtained, and then in the second polymerization step, propylene and other α-olefins (such as ethylene) are introduced to be polymerized such that the rubber portion such as ethylene-propylene rubber (EPR), ethylene-propylene-1-butene ternary copolymer is 25.0 to 50.0 mass% of the entire propylene-based block copolymer to be obtained through adjustment of the reaction conditions.

The polymerization reaction in the second polymerization step is preferably performed typically through a gas phase polymerization reaction to prevent the rubber portion such as EPR from eluting from polypropylene particles.

The polymerization reactions in the first and second polymerization steps may be performed by any one of a continuous polymerization method or a batch polymerization method.

Furthermore, the polymerization reaction may be a single-stage or multi-stage reaction in any one of the first polymerization step and the second polymerization step. In the case where each step is performed in multiple stages, each step may be performed under the same conditions or different conditions.

In the method for producing a propylene-based block copolymer according to the present invention, the polymerization of olefins in the first and second polymerization steps may be performed by heating and pressurizing the olefins in a reactor (polymerization tank) such as autoclave in the presence of a catalyst for olefin polymerization.

For example, after a first polymerization step of polymerizing monomers containing propylene only as olefin in a first polymerization tank to obtain a propylene-based polymer, a subsequent second polymerization step of copolymerizing propylene and an α-olefin other than propylene (such as ethylene) in a second polymerization tank or in multiple stages (multi-stage polymerization tank) in the presence of the resulting propylene-based polymer is performed to obtain a propylene/α-olefin random copolymer, thereby a desired propylene-based block copolymer may be produced.

The polymerization pressure in the first polymerization step and the second polymerization step is preferably 10 MPa or less, more preferably 5 MPa or less.

Further, the polymerization time (residence time of the reactants) is suitably 1 minute to 5 hours in total in the first polymerization step and the second polymerization step.

In the method for producing a propylene-based block copolymer according to the present invention, in order to further improve the catalytic activity, stereoregularity, particle properties of the resulting polymer, etc., in polymerization of olefins using a catalyst for olefin polymerization (also referred to as main polymerization), it is preferable that prepolymerization be performed prior to the main polymerization. In the prepolymerization, the same olefins or monomers such as styrene as in the main polymerization may be used.

In the prepolymerization, the components each constituting the catalyst for olefin polymerization and the monomers (olefins) may be contacted in an optional order. It is however preferable that a prepolymerization system filled with an inert gas atmosphere or an olefin gas atmosphere be charged firstly with an organoaluminum compound and then with the solid catalyst component for olefin polymerization to be contacted, and then olefins such as propylene alone or a mixture of propylene and an α-olefin other than propylene be mixed therein to be contacted.

In the prepolymerization, in the case where the prepolymerization system is charged further with (C) an external electron donor compound, it is preferable that a prepolymerization system filled with an inert gas atmosphere or an olefin gas atmosphere be charged firstly with (B) an organoaluminum compound and then with (C) the external electron donor compound to be contacted, and after further contacting with (A) the solid catalyst component for olefin polymerization, the olefins such as propylene be contacted alone or a mixture of propylene and an α-olefin other than propylene be contacted.

Examples of the propylene-based block copolymer obtained by the production method according to the present invention include the propylene-based block copolymer according to the present invention to be described below.

Next, the propylene-based block copolymer obtained by the production method of the present invention is described.

The propylene-based block copolymer obtained by the production method of the present invention has a melt flow rate (MFR) of preferably 10 to 200 g/10 minutes, more preferably 15 to 150 g/10 minutes, and still more preferably 20 to 100 g/10 minutes.

In the present application, the melt flow rate (MFR), which indicates the melt flowability of a polymer, refers to a value measured according to ASTM D 1238 and JIS K 7210.

In the method for producing a propylene-based block copolymer according to the present invention, the resulting propylene-based block copolymer has a propylene/α-olefin copolymer content of preferably 25.0 to 50.0 mass%, more preferably 30.0 to 45.0 mass%, and still more preferably 35.0 to 40.0 mass%.

In the present application, the content of the propylene/α-olefin copolymer in the propylene-based block copolymer means a value calculated as follows. A flask equipped with a stirrer is charged with 5.0 g of the propylene-based block copolymer and 250 ml of p-xylene. The external temperature is raised to above the boiling point of xylene (approximately 150°C), while maintaining the temperature of p-xylene inside the flask below the boiling point (137 to 138°C), so that the polymer is dissolved over two hours. Then, the liquid temperature is cooled to 23°C over one hour, and the insoluble and soluble components are separated through filtering. The solution of the soluble components is collected, and p-xylene is distilled off by heating and drying under reduced pressure. The weight of the resulting residue is determined to calculate the proportion (mass%) relative to the polymer produced (propylene-based block copolymer).

Also, in the method for producing a propylene-based block copolymer according to the present invention, the resulting propylene-based block copolymer has a propylene-based polymer content of preferably 50.0 to 75.0 mass%, more preferably 55.0 to 70.0 mass%, and still more preferably 60.0 to 65.0 mass%.

In the present application, the content of the propylene-based polymer in the propylene-based block copolymer means a value obtained by subtracting the propylene/α-olefin copolymer content (mass%) determined by the method described above and the ethylene content (mass%) in the xylene-insoluble matter from the total weight (mass%) of the resulting polymer (propylene-based block copolymer), with the total weight of the resulting polymer (propylene-based block copolymer) being taken as 100 (mass%).

The ethylene content in the xylene-insoluble matter means a value calculated as follows. A small amount of the xylene-insoluble matter obtained in measurement of the propylene/α-olefin copolymer content described above is sampled. The sample is hot-pressed into a film, and from the absorbance measured by a Fourier transform infrared spectrometer (FT-IR, manufactured by Thermonicolet, AvaTar) and the film thickness, the content is calculated based on a calibration curve prepared from a plurality of samples with known ethylene contents.
Measurement wavelength: 720 cm⁻¹ and 1150 cm⁻¹
Film thickness: 0.1 to 0.2 mm

The present invention provides a method for easily producing a propylene-based block copolymer, which exhibits excellent polymerization activity in the first polymerization step to perform a homopolymerization reaction of propylene or a copolymerization reaction of propylene with a small amount of an α-olefin (excluding propylene), and also excellent polymerization activity in the second polymerization step to perform a copolymerization reaction of propylene and an α-olefin (excluding propylene) in the presence of the propylene-based polymer obtained in the first polymerization step, having a sufficiently high melt flow rate for practical use and a high content of propylene/α-olefin copolymer components.

### Examples

The present invention will be more specifically explained with reference to Examples and Comparative Examples as follows, but the present invention is not particularly limited to these Examples.

### (Examples 1 to 3 and Comparative Examples 1 and 2)

### (1) Preparation of solid catalyst component for olefin polymerization

Into a 500-mL flask equipped with a stirrer and purged with nitrogen gas, 10 g (87.4 mmol) of diethoxy magnesium, 80 mL of toluene, 20 mL of titanium tetrachloride, and 12.0 mmol (2.6 g) of 2-isopropyl-2-isopentyl-1,3-dimethoxypropane were added to be contacted with each other for 120 minutes at a temperature of 100°C, so that a reaction is caused. After completion of the reaction, the contact product was washed four times with 60 mL of toluene at 100°C. A toluene solution of titanium tetrachloride with a volume ratio of titanium tetrachloride to toluene (titanium tetrachloride/toluene volume ratio) of 0.28 was additionally added, and the mixture was stirred to cause a reaction at 100°C for 15 minutes. After the reaction, the supernatant was extracted. This operation was repeated once more, and the product was washed six times with 75 mL of n-heptane at 40°C to obtain a solid catalyst component for olefin polymerization.

### (2) Formation of catalyst for olefin polymerization

A 2.0-L autoclave equipped with a stirrer and completely purged with nitrogen gas was charged with 2.42 mmol of triethyl aluminum and 0.0030 mmol of the solid catalyst component for olefin polymerization obtained in (1) described above in terms of titanium atom, so that a catalyst for olefin polymerization was prepared.

### (3) Production of ethylene-propylene block copolymer

After formation of the catalyst for olefin polymerization in (2), the autoclave equipped with a stirrer in which the catalyst for olefin polymerization had been formed was charged with 3.5 liters of hydrogen gas and 1.2 liters of liquefied propylene, and after prepolymerization at 20°C for 5 minutes, the temperature was raised to perform a homopropylene (homostage) polymerization reaction as first polymerization step at the polymerization temperature for the polymerization time respectively shown in Table 1.

After the homopropylene (homostage) polymerization reaction, propylene, ethylene and hydrogen were fed under a pressure of 1.2 MPa into the autoclave equipped with a stirrer in which the homopropylene (homo stage) polymerization reaction had been performed at rates of 2.3 L/min, 1.7 L/min and 0.086 L/min, respectively, to cause a copolymerization reaction at the polymerization temperature for the polymerization time respectively shown in Table 1 for forming the propylene/ethylene copolymer. Thereby, each of the ethylene-propylene block copolymers was obtained.

The resulting ethylene-propylene block copolymers were subjected to measurements of the propylene polymerization activity (homo-stage polymerization activity, g/g-catalyst), ethylene-propylene block copolymerization (ICP) activity (g/g-catalyst), total polymerization activity (g/g-catalyst), block ratio of the resulting block copolymer (polymerization ratio of copolymerized portion, mass%), melt flow rate (MFR) of the resulting block copolymer, ethylene-propylene copolymer (EPR) content (mass%) in the resulting block copolymer, and ethylene content (mass%) in the ethylene-propylene copolymer (EPR), by the following methods, respectively. The results are shown in Table 1.

### <Propylene polymerization activity>

The homo-stage polymerization activity in the copolymerization reaction was calculated by the following formula. 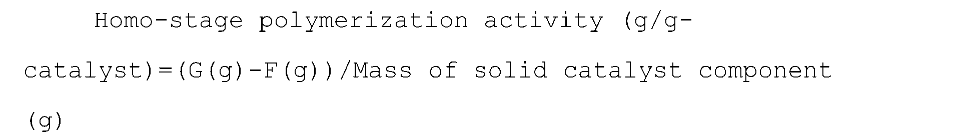 Homo-stage polymerization activity (g/g-catalyst)=(G(g)-F(g))/Mass of solid catalyst component (g) wherein, G(g) is the mass (g) of the autoclave after the unreacted monomer is removed after completion of the homo-PP polymerization reaction, and F(g) is the mass (g) of the autoclave.

### <Ethylene-propylene block copolymerization (ICP) activity (g/g-catalyst)>

The copolymerization (ICP) activity during formation of the ethylene-propylene block copolymer was calculated by the following formula. 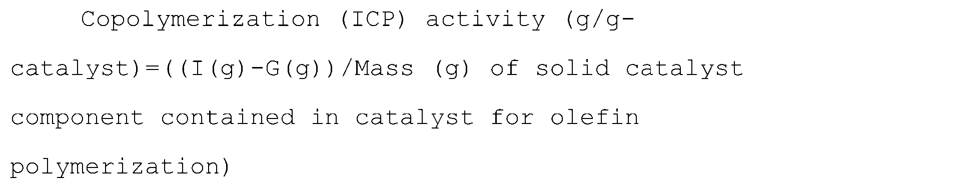 Copolymerization (ICP) activity (g/g-catalyst)=((I(g)-G(g))/Mass (g) of solid catalyst component contained in catalyst for olefin polymerization) wherein I(g) is mass (g) of the autoclave after completion of the copolymerization reaction, and G(g) is mass (g) of the autoclave after removal of the unreacted monomers after completion of the homo-PP polymerization reaction.

### <Total polymerization activity (g/g-catalyst)>

The total polymerization activity (g/g-catalyst) during production of the ethylene-propylene block copolymer was calculated by the following formula. 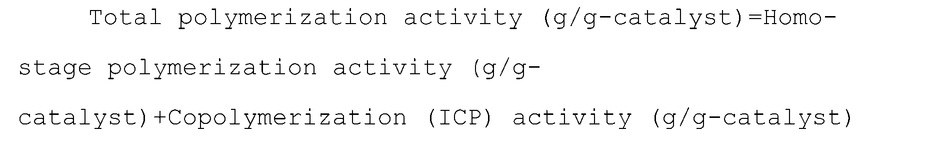 Total polymerization activity (g/g-catalyst)=Homo-stage polymerization activity (g/g-catalyst)+Copolymerization (ICP) activity (g/g-catalyst)

### <Block ratio (mass%)>

The block ratio of the resulting ethylene-propylene block copolymer was calculated by the following formula.$Block ratio \left(mass%\right) = \left\{\left(I\left(g\right)-G\left(g\right)\right)/\left(I\left(g\right)-F\left(g\right)\right)\right\} \times 100$ wherein I is mass (g) of the autoclave after completion of the copolymerization reaction, G is mass (g) of the autoclave after removal of unreacted monomers after completion of the homopolypropylene polymerization, and F is mass (g) of the autoclave.

### <Melt flow rate (MFR)>

The melt flow rate (MFR), which indicates the melt flowability of the resulting ethylene-propylene block copolymer, was measured in accordance with ASTM D 1238 and JIS K 7210.

### <Ethylene propylene copolymer (EPR) content (amount of soluble xylene in ICP polymer)>

A flask equipped with a stirrer was charged with 5.0 g of a copolymer (ethylene-propylene block copolymer) and 250 mL of p-xylene. Subsequently, the external temperature was set to about 150°C, and stirring was continued for 2 hours while maintaining reflux of p-xylene (boiling point: 137 to 138°C) in the flask to dissolve the polymer. Then, the solution was cooled to a liquid temperature of 23°C over 1 hour, and a xylene-soluble fraction (EPR) and a xylene-insoluble fraction (XI) were separated by filtration.

The soluble matter was collected as solution, and p-xylene was distilled off by heating and drying under reduced pressure. The weight of the resulting residue was determined, and the proportion (mass%) relative to the produced polymer (ethylene-propylene block copolymer) was calculated to determine the EPR content (amount of soluble xylene in ethylene-propylene block copolymer).

### <Ethylene content in EPR component>

A small amount of the soluble xylene fraction (EPR) separated as described in EPR content in copolymer was sampled and hot-pressed into a film, and from the absorbance measured by a Fourier transform infrared spectrometer (FT-IR, manufactured by Thermonicolet, Avatar) and the film thickness, the ethylene content in the soluble xylene content (XS) in ICP was calculated based on a calibration curve prepared from a plurality of samples with known contents.
Measurement wavelength: 720 cm⁻¹ and 1150 cm⁻¹
Film thickness: 0.1 to 0.2 mm

### <Ethylene content in insoluble xylene component (XI)>

A small amount of the insoluble xylene fraction (XI) separated for determination of the EPR content in the copolymer was sampled and hot-pressed into a film, and the ethylene content in the insoluble xylene component(XI) in ICP was calculated in the same manner as the ethylene content in the soluble xylene fraction (XS) in ICP.

### (Example 4 and Comparative Example 3)

### (1) Preparation of a solid catalyst component for olefin polymerization

Into a 500-mL flask equipped with a stirrer and purged with nitrogen gas, 10 g (87.4 mmol) of diethoxy magnesium, 55 mL of toluene, 15 mL of titanium tetrachloride, and 10.0 mmol (2.2 g) of 2-isopropyl-2-isopentyl-1,3-dimethoxypropane were added to be contacted with each other for 180 minutes at a temperature of 100°C, so that a reaction is caused. After completion of the reaction, the contact product was washed five times with 55 mL of toluene at 90°C. A toluene solution of titanium tetrachloride with a volume ratio of titanium tetrachloride to toluene (titanium tetrachloride/toluene volume ratio) of 0.33 was additionally added, and the mixture was stirred to cause a reaction at 100°C for 15 minutes. After the reaction, the supernatant was extracted. This operation was repeated further three times, and the product was washed six times with 75 mL of n-heptane at 40°C to obtain a solid catalyst component for olefin polymerization.

### (2) Formation of catalyst for olefin polymerization

A 2.0-L autoclave equipped with a stirrer and completely purged with nitrogen gas was charged with 2.42 mmol of triethyl aluminum and 0.030 mmol of the solid catalyst component for olefin polymerization obtained in (1) described above in terms of titanium atom, so that a catalyst for olefin polymerization (catalyst for ethylene-propylene copolymerization) was prepared.

### (3) Production of ethylene-propylene block copolymer

After formation of the catalyst for olefin polymerization in (2), the autoclave equipped with a stirrer in which the catalyst for olefin polymerization had been formed was charged with 3.5 liters of hydrogen gas and 1.2 liters of liquefied propylene, and after prepolymerization at 20°C for 5 minutes, the temperature was raised to perform a homopropylene (homostage) polymerization reaction as first polymerization step at the polymerization temperature for the polymerization time respectively shown in Table 1.

After the homopropylene (homostage) polymerization reaction, propylene, ethylene and hydrogen were fed under a pressure of 1.2 MPa into the autoclave equipped with a stirrer in which the homopropylene (homo stage) polymerization reaction had been performed at rates of 2.3 L/min, 1.7 L/min and 0.086 L/min, respectively, to cause a copolymerization reaction at the polymerization temperature for the polymerization time respectively shown in Table 1 for forming the ethylene-propylene copolymer. Thereby, each of the ethylene-propylene-based block copolymers was obtained.

The resulting ethylene-propylene block copolymers were subjected to measurements of the propylene polymerization activity (homo-stage polymerization activity, g/g-catalyst), ethylene-propylene block copolymerization (ICP) activity (g/g-catalyst), total polymerization activity (g/g-catalyst), block ratio of the resulting block copolymer (polymerization ratio of copolymerized portion, mass%), melt flow rate (MFR) of the resulting block copolymer, ethylene-propylene copolymer (EPR) content (mass%) in the resulting block copolymer, and ethylene content (mass%) in the ethylene-propylene copolymer (EPR), by the same methods as in Example 1, respectively. The results are shown in Table 1.

### (Comparative Example 4 and Comparative Example 5)

### (1) Preparation of a solid catalyst component for olefin polymerization

Into a 500-mL flask equipped with a stirrer and purged with nitrogen gas, 10 g (87.4 mmol) of diethoxy magnesium, 90 mL of toluene, 30 mL of titanium tetrachloride, and 15.8 mmol (4.4 g) of dibutyl phthalate were added to be contacted with each other for 180 minutes at a temperature of 90°C, so that a reaction is caused. After completion of the reaction, the contact product was washed four times with 75 mL of toluene at 90°C. A toluene solution of titanium tetrachloride with a volume ratio of titanium tetrachloride to toluene (titanium tetrachloride/toluene volume ratio) of 0.74 was additionally added, and the mixture was stirred to cause a reaction at 110°C for 60 minutes. After the reaction, the supernatant was extracted. The product was washed six times with 75 mL of n-heptane at 40°C to obtain a solid catalyst component for olefin polymerization.

### (2) Formation of catalyst for olefin polymerization

A 2.0-L autoclave equipped with a stirrer and completely purged with nitrogen gas was charged with 2.42 mmol of triethyl aluminum, 0.24 mmol of cyclohexyl methyl dimethoxy silane and 0.034 mmol of the solid catalyst component for olefin polymerization obtained in (1) described above in terms of titanium atom, so that a catalyst for olefin polymerization (catalyst for ethylene-propylene copolymerization) was prepared.

### (3) Production of ethylene-propylene block copolymer

After formation of the catalyst for olefin polymerization in (2), the autoclave equipped with a stirrer in which the catalyst for olefin polymerization had been formed was charged with 3.5 liters of hydrogen gas and 1.2 liters of liquefied propylene, and after prepolymerization at 20°C for 5 minutes, the temperature was raised to perform a homopropylene (homostage) polymerization reaction as first polymerization step at the polymerization temperature for the polymerization time respectively shown in Table 1.

After the homopropylene (homostage) polymerization reaction, propylene, ethylene and hydrogen were fed under a pressure of 1.2 MPa into the autoclave equipped with a stirrer in which the homopropylene (homo stage) polymerization reaction had been performed at rates of 2.3 L/min, 1.7 L/min and 0.086 L/min, respectively, to cause a copolymerization reaction at the polymerization temperature for the polymerization time respectively shown in Table 1 for forming the ethylene-propylene copolymer. Thereby, each of the ethylene-propylene-based block copolymers was obtained.

The resulting ethylene-propylene block copolymers were subjected to measurements of the propylene polymerization activity (homo-stage polymerization activity, g/g-catalyst), ethylene-propylene block copolymerization (ICP) activity (g/g-catalyst), total polymerization activity (g/g-catalyst), block ratio of the resulting block copolymer (polymerization ratio of copolymerized portion, mass%), melt flow rate (MFR) of the resulting block copolymer, ethylene-propylene copolymer (EPR) content (mass%) in the resulting block copolymer, and ethylene content (mass%) in the ethylene-propylene copolymer (EPR), by the same methods as in Example 1, respectively. The results are shown in Table 1.

**[Table 1]**

| | Homo-stage | | *** | | Homo-stage polymerization activity (g/g-catalyst) | Stage-copolymerization activity (g/g-catalyst) | Total polymerization activity (g/g-catalyst) | Block ratio (mass%) | MFR (g/10 minutes) | EPR content (mass%) | Ethylene content (mass%) | |
|---|---|---|---|---|---|---|---|---|---|---|---|---|
| | Temperature (°C) | Time (minutes) | Temperature (°C) | Time (minutes) | | | | | | | EPR | XI |
| Comparative Example 1 | 70 | 45 | 70 | 60 | 64600 | 16700 | 81300 | 20.5 | 58 | 21.5 | 40.2 | 30 |
| Comparative Example 2 | 70 | 45 | 80 | 60 | 60800 | 16400 | 77200 | 21.3 | 68 | 21.1 | 41.4 | 3.0 |
| Example 1 | 60 | 45 | 80 | 60 | 46600 | 23600 | 70200 | 33.6 | 41 | 33.8 | 37.8 | 4.2 |
| Example 2 | 65 | 45 | 70 | 60 | 49000 | 18500 | 67500 | 27.4 | 40 | 26.5 | 38.5 | 3.8 |
| Example 3 | 60 | 45 | 70 | 60 | 49400 | 26400 | 75800 | 34.8 | 27 | 33.7 | 37.8 | 44 |
| Comparative Example 3 | 70 | 45 | 70 | 90 | 83100 | 24700 | 107800 | 22.9 | 140 | 21.2 | 38.8 | 3.2 |
| Example 4 | 60 | 45 | 70 | 90 | 62900 | 46100 | 109000 | 42.3 | 43 | 39.4 | 37.0 | 61 |
| Comparative Example 4 | 70 | 45 | 70 | 60 | 47800 | 14867 | 62667 | 23.7 | 9.4 | 20.6 | 35.1 | 4.9 |
| Comparative Example 5 | 60 | 45 | 70 | 60 | 29000 | 18800 | 47800 | 39.4 | 5.3 | 33.6 | 32.2 | 8.4 |

From Table 1, it can be seen that in Examples 1 to 3, a specific solid catalyst component for olefin polymerization containing a 1,3-diether compound as internal electron donor compound and a catalyst for olefin polymerization having an organoaluminum compound are supplied to a polymerization reaction at a relatively low temperature in the range of 45°C to 65°C in a first polymerization step (homostage), so that the first polymerization step (homostage) and the second polymerization step (copolymerization stage) easily exhibit high polymerization activity, and an ethylene-propylene-based block copolymer having a melt flow rate (MFR) sufficiently high for practical use, a high block ratio, and a high EPR content can be easily produced.

On the other hand, from Table 1, it can be seen that in Comparative Examples 1 and 2, the catalyst for olefin polymerization is supplied to a polymerization reaction at a temperature exceeding 65°C in the first polymerization step (homostage), so that the second polymerization step (copolymerization stage) has low polymerization activity, and only ethylene-propylene-based block copolymers having a low block ratio and a low EPR content can be obtained.

Further, from Table 1, it can be seen that in Example 4 also, a specific solid catalyst component for olefin polymerization containing a 1,3-diether compound as internal electron donor compound and a catalyst for olefin polymerization having an organoaluminum compound are supplied to a polymerization reaction at a relatively low temperature in the range of 45°C to 65°C in a first polymerization step (homostage), so that the first polymerization step (homostage) and the second polymerization step (copolymerization stage) easily exhibit high polymerization activity, and an ethylene-propylene-based block copolymer having a melt flow rate (MFR) sufficiently high for practical use, a high block ratio, and a high EPR content can be easily produced.

On the other hand, from Table 1, it can be seen that in Comparative Example 3, the catalyst for olefin polymerization is supplied to a polymerization reaction at a temperature exceeding 65°C in the first polymerization step (homostage), so that the second polymerization step (copolymerization stage) has low polymerization activity, and only an ethylene-propylene-based block copolymer having a low block ratio and a low EPR content can be obtained.

Further, from Table 1, it can be seen that in Comparative Examples 4 and 5, a solid catalyst component for olefin polymerization containing no 1,3-diether compound as internal electron donor compound and a catalyst for olefin polymerization having an organoaluminum compound are used, so that the first polymerization step homostage) and the second polymerization step (copolymerization stage) have poor polymerization activity, and only an ethylene-propylene-based block copolymer having a low melt flow rate (MFR) can be obtained.

### Industrial Applicability

According to the present invention, a method for easily producing a propylene-based block copolymer having a high melt flow rate and a high content of propylene/o-olefin copolymer component, which exhibits excellent polymerization activity in the first polymerization step to perform a homopolymerization reaction of propylene or a copolymerization reaction of propylene with a small amount of an α-olefin (excluding propylene), and also excellent polymerization activity in the second polymerization step to perform a copolymerization reaction of propylene and an α-olefin (excluding propylene) in the presence of the propylene-based polymer obtained in the first polymerization step, can be provided.

## Claims

1. A method for producing propylene-based block copolymer comprising:
a first polymerization step of polymerizing olefins containing 95 to 100 mass% of propylene using a catalyst for olefin polymerization comprising (A) a solid catalyst component for olefin polymerization containing titanium, magnesium, a halogen, and a 1,3-diether compound as internal electron donor compound, and (B) an organoaluminum compound to obtain a propylene-based polymer under a temperature condition of 45°C to 65°C, and
a subsequent second polymerization step of copolymerizing olefins containing 5 mass% or more and less than 95 mass% of propylene and an α-olefin excluding propylene in the presence of the propylene-based polymer under a temperature condition of 50°C to 90°C to obtain a propylene/α-olefin copolymer.

2. The method for producing the propylene-based block copolymer according to the claim 1,
wherein (B) the organoaluminum compound is one or more compounds represented by the following general formula (I):
R¹ₚAlQ₃₋ₚ (I)
wherein R¹ is an alkyl group having 1 to 6 carbon atoms, Q is a hydrogen atom or a halogen atom, p satisfies 0<p≤3, in the case where a plurality of R¹ is present, R¹ each may be the same or different from each other, and in the case where a plurality of Q is present, Q each may be the same or different from each other.

3. The method for producing a propylene-based block copolymer according to claim 1,
wherein the catalyst for olefin polymerization further comprises (C) an external electron donor compound.

4. The method for producing a propylene-based block copolymer according to any one of claims 1 to 3,
wherein the content of propylene/α-olefin portion in the resulting propylene-based block copolymer is 25.0 to 50.0 mass%.
